# FASCICULE DE BREVET EUROPEEN

(11) **EP 3 234 948 B1**
(45) Date de publication et mention de la délivrance du brevet: **07.08.2019**
(21) Numéro de dépôt: 15817806.1
(22) Date de dépôt: 18.12.2015
(51) Int. Cl.: G21C 13/06, G21C 3/30, G21C 3/334, G21C 3/335, G21C 19/105, G21C 19/20

(54) **ASSEMBLAGE COMBUSTIBLE POUR REACTEUR NUCLEAIRE DE TYPE RNR-NA, A BOITIER LOGEANT UN DISPOSITIF DE PROTECTION NEUTRONIQUE SUPERIEURE SOLIDARISE DE MANIERE AMOVIBLE**
BRENNELEMENTBÜNDEL FÜR EINEN SFR KERNREAKTOR, MIT EINEM GEHÄUSE MIT LÖSBAR BEFESTIGTER OBERER NEUTRONENABSCHIRMUNGSVORRICHTUNG
FUEL ASSEMBLY FOR AN SFR NUCLEAR REACTOR, COMPRISING A HOUSING CONTAINING A REMOVABLY FASTENED UPPER NEUTRON SHIELDING DEVICE

(30) Priorité: 19.12.2014 FR 1463003
(43) Date de publication de la demande: 25.10.2017
(73) Titulaire: Commissariat à l'Énergie Atomique et aux Énergies Alternatives, 75015 Paris (FR)
(72) Inventeur: LORENZO, Denis, 04100 Manosque (FR); BECK, Thierry, 04860 Pierrevert (FR); MAILHE, Guy, 04860 Pierrevert (FR)
(74) Mandataire: Nony
(86) Numéro de dépôt international: PCT/EP2015/080460
(87) Numéro de publication internationale: WO 2016/097277

(56) Documents cités:
- FR-A- 1 305 511

## Description

### Domaine technique

La présente invention concerne un assemblage combustible pour réacteur nucléaire à neutrons rapides refroidi avec du métal liquide, notamment du sodium liquide dit RNR-Na ou SFR (acronyme anglais de « *Sodium Fast Reactor* ») et qui fait partie de la famille des réacteurs dits de quatrième génération.

L'invention vise à proposer en premier lieu un assemblage combustible qui puisse être utilisé à court terme dans le projet de démonstrateur technologique de réacteur de quatrième génération baptisé ASTRID.

Les assemblages combustibles visés par l'invention peuvent être aussi bien utilisés dans un réacteur nucléaire de type intégré, c'est-à-dire pour lequel le circuit primaire de sodium avec des moyens de pompage est totalement contenu dans une cuve contenant également et des échangeurs de chaleur, que dans un réacteur de type à boucles, c'est-à-dire pour lequel les échangeurs intermédiaires de chaleur et les moyens de pompage du sodium primaire sont situés hors de la cuve.

Par assemblage combustible, on entend un ensemble comprenant des éléments combustibles et chargé et/ou déchargé dans/depuis un réacteur nucléaire.

Par assemblage combustible de type RNR-Na ou SFR, on entend un assemblage combustible adapté pour être irradié dans un réacteur nucléaire à neutrons rapides refroidi avec du sodium liquide dit RNR-Na ou SFR.

### Etat de la technique

Les assemblages combustibles destinés à être utilisés dans les réacteurs à neutrons rapides refroidis au sodium liquide (RNR-Na), comportent dans leur partie supérieure un dispositif de protection neutronique, usuellement désigné par l'expression « Protection Neutronique Supérieure » ou par leur acronyme PNS. On pourra se reporter à la publication [1].

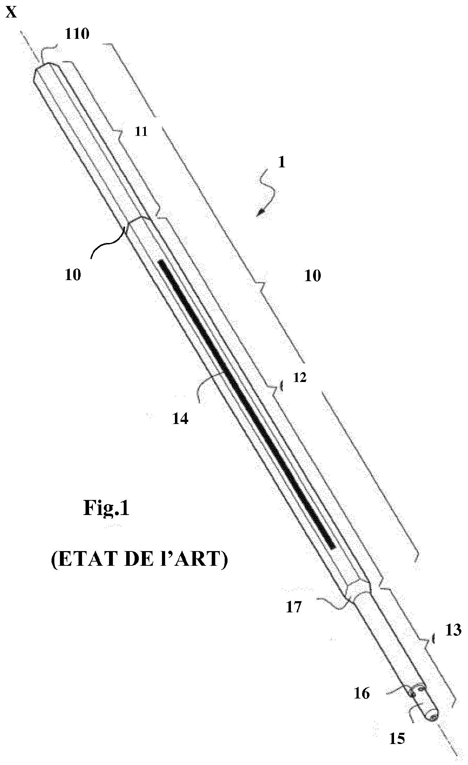

On a représenté en figure 1, un assemblage combustible 1 déjà utilisé dans un réacteur nucléaire RNR-Na connu sous la dénomination « Phénix ». Un tel assemblage 1 de forme allongée selon un axe longitudinal X comprend tout d'abord un tube ou boitier 10 à section hexagonale, dont la portion supérieure 11 forme la tête de l'assemblage, et qui enveloppe usuellement une PNS non représentée et dont la portion centrale 12 enveloppe des aiguilles de combustible non représentés. Autrement dit, les portions 11, 12 forment une même enveloppe tubulaire 10 ou boitier de section hexagonale identique sur toute sa hauteur. La tête 11 de l'assemblage comporte une ouverture centrale 110 débouchant en son sein. L'assemblage 1 comprend enfin une portion inférieure 13 formant le pied de l'assemblage, dans le prolongement du boitier 10. Le pied 13 de l'assemblage présente une extrémité distale 15 en forme de cône ou arrondie pour pouvoir être inséré à la verticale dans le sommier d'un coeur de réacteur. Le pied 13 de l'assemblage comporte à sa périphérie des ouvertures 16 débouchant en son sein.

Ainsi, en configuration installée d'un assemblage combustible, c'est-à-dire en position chargée dans un coeur de réacteur, le pied 13 d'un assemblage 1, de forme mâle, est inséré dans une ouverture du sommier du réacteur et en maintenant ainsi l'assemblage 1 dans ce dernier avec son axe longitudinal X à la verticale. Le sodium primaire peut circuler à l'intérieur de l'assemblage 1 et ainsi prendre par conduction thermique la chaleur dégagée par les aiguilles de combustible. Le sodium est ainsi introduit par les ouvertures 16 du pied 13 et sort par l'ouverture centrale 110 de la tête 11, après avoir traversé le faisceau d'aiguilles combustibles.

Comme mieux illustré en figure 1, la section du pied 13 de l'assemblage est inférieure à la section hexagonale du boitier 10 de l'assemblage. Le raccord 17 entre ces deux sections 10, 13 forme un épaulement plus ou moins arrondi ou conique de sorte à pouvoir réaliser une liaison de type sphère/cône avec le sommier du coeur de réacteur.

La portion centrale 12 d'un assemblage comprend une pluralité d'aiguilles de combustibles nucléaires. Chaque aiguille est sous la forme d'une gaine à l'intérieur de laquelle est empilée une colonne 14 de pastilles de matière fissile au sein desquelles se produisent les réactions nucléaires qui dégagent de la chaleur. Toutes les colonnes 14 définissent ce que l'on dénomme usuellement la zone fissile et est approximativement située à mi-hauteur d'un assemblage 1. Elle est schématisée sous forme d'un rectangle noir en figure 1.

Une PNS telle que celle enveloppée dans la tête 11 intègre des matériaux neutrophages, afin de limiter l'activation du sodium secondaire qui traverse les échangeurs de chaleur, de diminuer l'endommagement sous irradiation des structures du bouchon du réacteur usuellement appelé « Bouchon Couvercle Coeur (BCC) » et enfin de garantir la protection radiologique du personnel situé au-dessus de la dalle du réacteur.

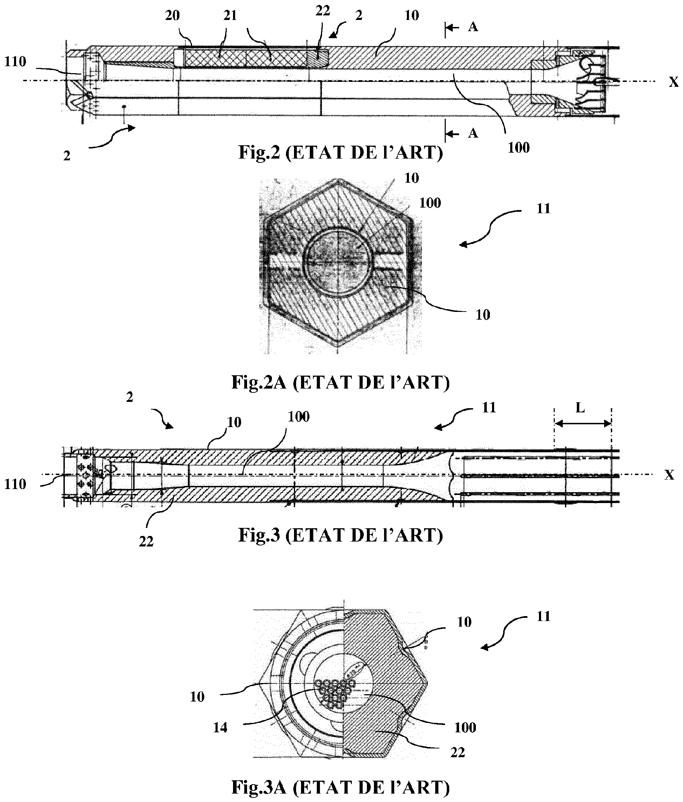

On a illustré en figures 2 et 2A, une PNS 2 intégrée dans la tête 11 d'un assemblage combustible 1 utilisé dans le réacteur Phénix. Une telle PNS 2 est constituée de manchons tubulaires étanches 20 intégrant des blocs en carbure de bore 21 et des blocs en acier 22 complété en partie inférieure par un boîtier 10 en acier plus massif. Une telle PNS 2 est logée de manière indémontable à l'intérieur du boitier 10 assurant l'architecture mécanique de l'assemblage combustible. Comme visible en figure 2A, le boitier 10 définit en son centre un passage 100 pour la circulation interne de sodium.

On a illustré en figures 3 et 3A, une PNS 2 intégrée dans la tête 11 d'un assemblage combustible 1 utilisé dans le réacteur nucléaire RNR-Na, connu sous la dénomination «Superphénix». Une telle PNS 2 est constituée par un manchon d'acier massif 20 relié au boitier hexagonal 10. Dans ce type d'assemblages 1, la zone fissile 14 comporte dans sa partie supérieure un empilement de pastilles d'oxydes d'uranium appauvri, désigné sous la dénomination de « Couverture Axiale Supérieure » (CAS), qui a pour fonction d'aplatir le flux neutronique et dont la longueur L est relativement importante, de l'ordre de 300 mm.

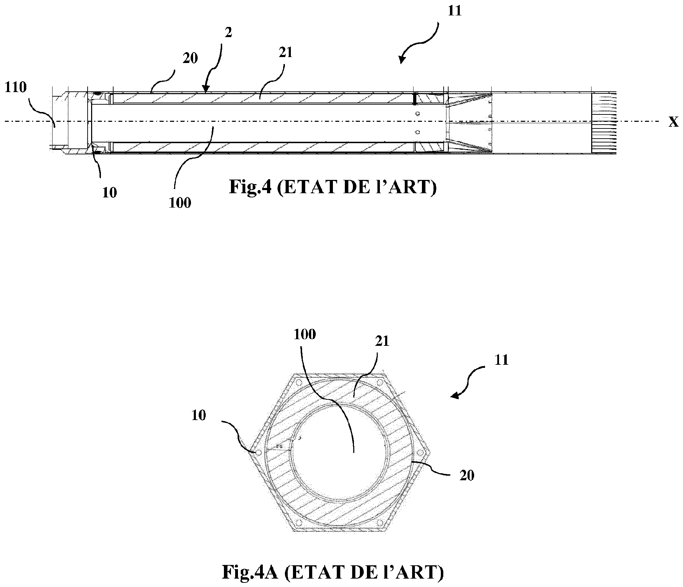

Dans le cadre des différents exercices de conception des assemblages combustibles 1 du réacteur ASTRID, les concepteurs ont développé une version préliminaire d'assemblage combustible à PNS fixe. Un assemblage combustible 1 selon cette version préliminaire est montré en figures 4 et 4A : la PNS 2 est constituée d'un manchon tubulaire non étanche 20 intégrant du carbure de bore 21, le manchon tubulaire 20 étant logé de manière fixe dans la paroi du boitier hexagonal 10. Cette PNS embarque un volume de matériau neutrophage suffisant pour respecter le critère d'activation du sodium secondaire fixé pour le réacteur de 4^{ème} génération de type ASTRID.

De fait, il existe trois spécifications principales de radioprotection pour les PNS des assemblages combustibles destinés à être utilisés dans le réacteur ASTRID, que l'on peut énumérer comme suit :
- la limitation de l'activation du sodium secondaire,
- la limitation de l'endommagement sous irradiation des structures du Bouchon Couvercle Coeur (BCC),
- la protection radiologique du personnel situé au-dessus de la dalle du réacteur.

Ces spécifications principales d'une PNS sont globalement valables pour tous les réacteurs.

Cependant, la configuration du réacteur ASTRID est particulièrement pénalisante dans la mesure où l'on trouve un minimum de structures absorbant le flux neutronique entre le haut du combustible fissile et le bas des PNS, telles que les structures CAS de longueur importante pour un assemblage combustible utilisé dans le réacteur Superphénix. En effet, comme cela sera expliqué ci-après, ceci est lié à la spécification de coeur à faible vidange (CFV) qui nécessite un volume (plénum) de sodium entre les aiguilles combustibles et le bas de la PNS, mais également à l'absence de couverture fertile en partie supérieure des aiguilles de combustible, qui est notamment liée à la spécification de non-prolifération pour les réacteurs de quatrième génération.

Autrement dit, le niveau de fluence neutronique vu par une PNS d'un assemblage combustible destiné à être utilisé dans le réacteur ASTRID est nettement plus élevé que pour tous les assemblages combustibles des réacteurs RNR-Na antérieurs pourvus d'une structure CAS et dont le coeur n'est pas CFV.

Dans ces conditions, la configuration d'un assemblage combustible de type Superphénix telle qu'illustrée en figures 3 et 3A ne peut être retenue, car la PNS 2 en acier massif n'est pas du tout suffisante vis-à-vis de la protection neutronique, à moins de développer des hauteurs très importantes de PNS, ce qui serait totalement inacceptable pour la hauteur du coeur d'un réacteur du type d'ASTRID.

Dans le contexte ASTRID, la PNS doit en outre répondre à une spécification de sûreté. Il s'agit de favoriser l'effet de vidange sodium dit « effet plénum » qui est une caractéristique d'un coeur de réacteur de type CFV (coeur à faible effet de vidange) disposant d'un comportement favorable en transitoires et d'un coefficient de vidange sodium négatif. On rappelle ici qu'un coefficient de vidange (en anglais « *void coefficient* ») (exprimé en dollars) traduit la variation du facteur de multiplication du réacteur lorsque le caloporteur n'est plus présent dans le coeur. Si ce coefficient est positif, la vidange se traduira par une augmentation de la réactivité et de la puissance du coeur. S'il est négatif, cet effet tendra à arrêter la réaction en chaîne. Le dollar est une unité de réactivité. Un dollar ($) correspond à une augmentation de réactivité comptée par rapport à la proportion de neutrons retardés (en anglais, « *delayed neutron fraction* »).

Cette spécification de sûreté est a priori totalement nouvelle par rapport à tous les réacteurs nucléaires RNR ayant fonctionné ou en fonctionnement. Elle nécessite obligatoirement l'utilisation en partie inférieure de la PNS d'absorbants en carbure de bore B₄C fortement enrichi en isotope du bore ¹⁰B, ce qui exclut définitivement une PNS en acier massif du type Superphénix. Ceci, combiné au fort niveau de fluence vu par cette partie inférieure de la PNS du fait de l'absence de CAS comme expliqué précédemment, conduit à une très forte production d'hélium par le B₄C sous irradiation.

La conséquence directe de cela est, pour un concept de PNS étanche, la nécessité d'aménager des vases d'expansion, volumes libres permettant d'accommoder le gaz produit, de l'ordre de 800 mm de hauteur pour des pressions de l'ordre de la centaine de bars. Or, de tels vases d'expansion sont inacceptables à la fois en termes d'encombrement et en termes de sûreté. Ainsi, un mètre de plus sur la hauteur d'un coeur implique notamment deux mètres de plus sur la hauteur de cuve, entrainant une augmentation significative des coûts d'investissement. Et, s'il devait y avoir une perte de confinement de ces importants volumes de gaz emmagasinés dans les vases d'expansion, il y aurait alors un risque de transitoires rapides de puissance du coeur.

Pour toutes ces raisons, le concept de PNS étanche retenu par exemple pour un assemblage combustible pour le réacteur Phénix, tel qu'illustré en figure 2 et 2A, ne peut être retenu pour un assemblage combustible pour ASTRID.

Enfin, une PNS doit répondre à des spécifications relatives à la première étape de démantèlement de l'assemblage. Celle-ci impose d'une part, une capacité de dissociation des exutoires entre les éléments absorbants neutroniques et les éléments de combustible nucléaire et d'autre part, une compatibilité avec les procédés de lavage et d'entreposage en eau des assemblages après irradiation.

Ces deux spécifications ne sont pas nouvelles, mais prennent probablement plus d'importance pour les assemblages combustibles pour un réacteur de quatrième génération comme ASTRID que pour ceux des réacteurs RNR antérieurs.

En effet, si l'on se réfère aux assemblages combustibles des réacteurs Phénix et Superphénix, illustrés respectivement aux figures 2 et 3, les PNS étaient logées de manière indémontable dans les boitiers des assemblages combustibles. Lorsqu'on réalise le démantèlement de ces assemblages connus, il est nécessaire d'effectuer un tronçonnage de l'assemblage irradié, ce qui constitue une opération de découpe lourde, très difficilement automatisable et nécessitant des cellules spécifiques, des équipements et des espaces de stockage supplémentaires très coûteux.

Aussi, pour un réacteur de quatrième génération comme ASTRID, les inventeurs sont parvenus à la conclusion qu'il faudrait développer une liaison facilement démontable entre la PNS et le reste de l'assemblage combustible afin de permettre l'extraction de la PNS par un dispositif de type grappin de manutention. Ce démontage devrait par ailleurs pouvoir être assuré en sodium ou en gaz, avant les opérations de lavage précédant l'entreposage en eau de l'assemblage combustible, opérations qui ne sont pas envisageables aujourd'hui pour une PNS non étanche constituée d'éléments absorbants en B₄C.

En effet, aucune des solutions technologiques de désodage étudiées jusqu' à présent en R&D ne permet d'espérer obtenir un désodage efficace et intégral à l'échelle industrielle, ce qui est incompatible avec un entreposage en piscine tel que prévu pour le réacteur ASTRID. La présence de sodium résiduel dans la PNS après lavage, plus précisément dans le jeu entre absorbants neutroniques et gaine, présente des risques de réaction inopinée entre le sodium et l'eau et incontrôlée lors de l'entreposage en eau des assemblages pendant une longue durée.

Par conséquent, pour une PNS non étanche il faut pouvoir désolidariser la PNS du reste de l'assemblage combustible avant l'opération de lavage. Cet impératif de démontage de la PNS avant lavage est valable quel que soit le mode de stockage interne ou externe des assemblages irradiés qui serait finalement retenu. En mode de stockage externe, un barillet de type de celui mis en oeuvre dans les réacteurs Phénix ou Superphénix constituerait l'emplacement idéal pour assurer ce démontage, cette opération étant alors assurée en ligne sous sodium, ne nécessitant pas d'équipement coûteux supplémentaire et étant sans aucun impact sur la disponibilité du réacteur puisque l'opération de démontage pourrait être assurée pendant que le réacteur est en fonctionnement. En mode de stockage interne, il faudrait pouvoir assurer le démontage en ligne de la PNS sous atmosphère gaz dans des hottes de manutention des assemblages.

De l'ensemble des spécifications fonctionnelles décrites précédemment, les inventeurs sont parvenus à la conclusion qu'un assemblage combustible pour réacteur RNR-Na de quatrième génération de type ASTRID devait répondre aux critères de conception suivants :
- avoir une liaison mécanique démontable entre la PNS et le reste de l'assemblage de sorte à assurer l'extraction en ligne de la PNS de l'assemblage avant l'opération de lavage, soit dans un barillet de stockage en sodium, soit dans une hotte de manutention en gaz prévue à cet effet;
- présenter une fraction surfacique d'absorbants neutroniques de type B₄C qui soit proche de celle d'une PNS non démontable selon la version préliminaire d'assemblage combustible montrée aux figures 4 et 4A et qui favorise l'effet plénum mentionné ci-avant et ce sans augmenter de manière significative la hauteur de la PNS et donc la hauteur des assemblages du coeur de réacteur;
- minimiser l'encombrement axial des moyens de solidarisation entre PNS et le reste de l'assemblage afin de ne pas augmenter de manière significative la hauteur de la PNS et donc la hauteur des assemblages du coeur de réacteur.

En outre, la liaison mécanique démontable doit:
- permettre de réaliser une manutention d'un assemblage combustible avec le même type de grappin, que l'assemblage soit équipé ou non de la PNS, en hotte de manutention ou en barillet ;
- être robuste, c'est-à-dire qu'elle doit présenter un risque de défaillance très faible, tant vis-à-vis d'une désactivation intempestive en réacteur (au risque notamment d'une chute sur le faisceau d'aiguilles combustibles, ce qui n'est évidemment pas souhaitable en termes de sûreté) que d'un blocage / grippage lors de l'extraction par un grappin de préhension (ce qui grèverait le taux de disponibilité du réacteur).

Les inventeurs ont alors cherché à identifier parmi les solutions connues de fixation amovible en cuve de réacteur nucléaire, celles qui pouvaient convenir à la réalisation d'une liaison démontable entre la PNS et le reste d'un assemblage combustible pour réacteur RNR-Na de quatrième génération de type ASTRID.

On peut classer les solutions connues en deux catégories.

La première concerne les solutions de liaison démontable entre une PNS et un assemblage nucléaire.

Ainsi, le brevet FR2402923 divulgue un assemblage combustible pour réacteur nucléaire, notamment pour un réacteur RNR-Na, comprenant une tête d'assemblage qui intègre également une PNS massive en acier et qui est solidarisée de manière amovible au reste de l'assemblage au moyen d'un système de broches transversales à l'axe longitudinal de l'assemblage ou d'un système à baïonnette. Un assemblage selon ce brevet FR2402923 est incompatible avec les spécifications fonctionnelles précisées ci-dessus pour plusieurs raisons. Tout d'abord, la tête de manutention de l'assemblage est solidaire de la PNS, ce qui exclut la possibilité d'une manutention de l'assemblage avec le même grappin, qu'il soit équipé ou non de sa PNS. De plus, la liaison par le système à broches ou baïonnette doit reprendre la charge de l'assemblage en manutention, ce qui induit un risque très difficilement acceptable en termes de sûreté, du fait d'un risque de rupture de la liaison. Enfin, la liaison ne peut pas être démontée en ligne et la manutention du reste de l'assemblage est impossible après désolidarisation de l'ensemble tête-PNS.

Le brevet FR 2513797 divulgue également un assemblage combustible pour réacteur nucléaire, notamment pour un réacteur RNR, avec une liaison démontable de la PNS. La PNS divulguée est constituée d'une capsule cylindrique contenant le matériau neutrophage et maintenue au centre de l'assemblage par trois plaques disposées à 120°, la partie supérieure de ces plaques formant une tête de préhension de l'assemblage, ces plaques étant fixées chacune sur le corps de l'assemblage par des clous soudés ou par des coins profilés encastrés et soudés ou par des cerclages soudés. Un assemblage selon ce brevet FR 2513797 présente les mêmes incompatibilités avec les spécificités fonctionnelles d'un assemblage combustible pour réacteur RNR-Na de quatrième génération de type ASTRID, qu'un assemblage selon le brevet FR 2402923. En outre, la capsule contenant le matériau neutrophage divulguée dans ce document est étanche et conduirait, dans les conditions de fonctionnement d'un réacteur RNR-Na de quatrième génération de type ASTRID, à des vases d'expansion très pénalisants pour la hauteur de l'assemblage et pour la sûreté du coeur.

Le brevet US4935197 divulgue également un assemblage combustible pour réacteur nucléaire, avec une liaison démontable de la PNS. La PNS divulguée est constituée d'un faisceau d'aiguilles d'absorbants neutroniques fixé par des liaisons vissées ou par des liaisons de type baïonnette à la tête de l'assemblage combustible, elle-même fixée par des liaisons vissées au boitier de section hexagonale. Ici encore, un assemblage selon ce brevet US4935197 présente les mêmes incompatibilités avec les spécificités fonctionnelles d'un assemblage combustible pour réacteur RNR-Na de quatrième génération de type ASTRID, qu'un assemblage selon les brevets FR 2402923 et FR 2513797. En particulier, il n'est pas du tout envisageable de démonter ou de remonter en ligne les liaisons vissées qui sont divulguées. Par ailleurs, même si ces opérations de dévissage et de vissage devaient être réalisées en hotte de manutention, les inventeurs pensent que la fiabilité de ces liaisons ne pourrait être réellement assurée dans un environnement en réacteur à sodium liquide, du fait des multiples sources de déformation, d'endommagement mécanique et de grippage après un long séjour en réacteur, telles que le gonflement sous irradiation, le fluage, la fragilisation sous irradiation, les chargements mécaniques appliqués à la tête pendant les opérations de manutention, l'environnement sodium... Cette absence de fiabilité est également vraie pour une liaison à baïonnette entre la tête d'assemblage et le boitier, car il serait très difficilement acceptable de faire porter à ce type de liaison la fonction mécanique de reprise de la charge de l'assemblage combustible pendant la phase de manutention.

En résumé, les solutions connues dans la catégorie de liaisons démontables de PNS ne sont pas adaptées pour réaliser la liaison entre une PNS et le reste d'un assemblage combustible pour réacteur RNR-Na de quatrième génération de type ASTRID, essentiellement pour les raisons suivantes :
- les liaisons connues ne sont pas démontables en ligne;
- les assemblages combustibles sont nécessairement manutentionnés par la PNS : la tête de manutention de l'assemblage est extraite en même temps que la PNS, ce qui ne permet plus de manutentionner l'assemblage avec le même grappin après extraction de la PNS. Les liaisons connues entre la PNS et l'assemblage doivent donc assurer la reprise de charge de l'assemblage en manutention, ce qui induit un risque très difficilement acceptable en termes de sûreté, du fait du risque de rupture de cette liaison en phase de manutention.

La deuxième catégorie concerne les solutions de verrouillage/déverrouillage d'autres dispositifs amovibles en cuve de réacteur nucléaire.

Le brevet EP 0312416 divulgue la fixation amovible d'un dispositif de réglage du débit (déprimogène) disposé en tête d'un assemblage combustible pour réacteur RNR, le démontage de la fixation étant assuré en ligne par le grappin de manutention de l'assemblage. Ce brevet présente par ailleurs un système de verrouillage constitué par des doigts pivotants dont le pivotement est assuré indirectement par la translation verticale du grappin. Ici encore, la solution proposée selon ce brevet EP0312416 ne permet pas de répondre correctement aux spécificités fonctionnelles d'un assemblage combustible pour réacteur RNR-Na de quatrième génération de type ASTRID, telles que précisées en préambule. En effet, tout d'abord, le système de verrouillage divulgué présente un encombrement axial trop important et l'épaulement interne nécessaire dans la tête d'assemblage implique une réduction de section radiale également trop importante. En outre, le système divulgué ne permet en aucun cas un forçage mécanique des doigts de verrouillage en cas de grippage. Enfin, le dispositif déprimogène divulgué est manutentionné par le même grappin que celui servant à la manutention des assemblages avec une impossibilité de manutentionner l'assemblage sans avoir préalablement ôté le déprimogène, ce qui est incompatible avec le taux de disponibilité d'un réacteur nucléaire de type industriel. Ces deux derniers points empêcheraient même probablement toute exploitation en réacteur nucléaire RNR.

Le brevet BE558245 divulgue une solution de fixation amovible d'élément combustible dans un canal vertical de réacteur nucléaire de type à l'uranium naturel graphite gaz (UNGG), avec un système de doigts pivotants dont le pivotement est actionné plus ou moins directement par un grappin et permet d'assurer un verrouillage de l'élément combustible. Ici encore, la solution divulguée selon ce brevet BE558245 présente les mêmes incompatibilités avec les spécificités fonctionnelles d'un assemblage combustible pour réacteur RNR-Na de quatrième génération de type ASTRID. En particulier, le verrouillage assuré par le pivotement des doigts est prévu uniquement pour empêcher la chute gravitaire de l'élément combustible, c'est-à-dire un blocage contre la translation axiale vers le bas. Autrement dit, ce verrouillage ne permet pas d'empêcher l'envol d'un dispositif, telle qu'une PNS amovible, sous la force de traînée exercée par un caloporteur. Par ailleurs, dans ce brevet, le rappel des doigts pivotants est assuré par un ressort, ce qui ne peut pas être retenu dans un réacteur RNR car n'étant pas considéré comme une solution fiable, du fait du risque d'évolution sous irradiation des caractéristiques élastiques du ressort.

La demande de brevet EP 2741298 A1 divulgue un système de préhension et de verrouillage/déverrouillage d'un porte-échantillon de matériaux nucléaires dans un porte-instrumentation pour irradiations expérimentales, système dont les deux principaux objectifs sont de développer un grappin de manutention sans pièce mobile et d'assurer un verrouillage étanche du porte-échantillon sur le grappin. Pour ce faire, le système de verrouillage/déverrouillage divulgué met en oeuvre de nombreuses petites pièces mobiles décrivant une cinématique précise et assez complexe qui, combinée à l'objectif de verrouillage étanche, nécessite des ajustements serrés. Ce système n'est pas adapté pour la manutention en ligne de pièces massives comme une PNS d'un assemblage combustible pour un démonstrateur de filière comme ASTRID. Par ailleurs, le système de verrouillage/déverrouillage comporte un ressort de rappel de ces pièces, ce qui ne peut pas être retenu dans un réacteur RNR, comme pour le brevet BE558245.

Le brevet FR 1 305 511 A divulgue un assemblage combustible nucléaire comportant un boîtier d'axe longitudinal, le boîtier comprenant une portion centrale logeant des aiguilles de combustible nucléaire et une portion supérieure fermée par un bouchon. Des moyens de verrouillage du bouchon sont actionnés par déplacement selon l'axe longitudinal d'un organe de blocage au moyen d'un grappin d'extraction.

En résumé, tout comme les liaisons démontables de PNS connues, les systèmes de verrouillage connus de dispositifs amovibles en réacteur analysés ci-dessus ne permettraient pas non plus de répondre correctement aux spécifications de liaison entre une PNS et le reste d'un assemblage combustible pour un réacteur RNR-Na de quatrième génération de type ASTRID.

Il existe donc un besoin d'améliorer les liaisons démontables d'une PNS à un assemblage combustible, notamment afin de répondre aux spécifications de liaison entre une PNS et le reste d'un assemblage combustible pour réacteur RNR-Na de quatrième génération de type ASTRID.

Le but de l'invention est de répondre au moins en partie à ce besoin.

### Exposé de l'invention

Pour ce faire, l'invention a pour objet un assemblage combustible pour réacteur nucléaire, notamment pour un réacteur refroidi au sodium RNR-Na, comportant un boitier d'axe longitudinal (X) destiné à être inséré à la verticale dans le supportage du coeur du réacteur, le boitier comprenant une portion centrale logeant des aiguilles de combustible nucléaire et une portion supérieure formant une partie de la tête de l'assemblage logeant un dispositif de protection neutronique supérieure (PNS) comportant des absorbants neutroniques et des moyens de verrouillage amovible avec le boitier et une masselotte formant la tête de la PNS, montée mobile en translation par rapport au reste de la PNS sur une course donnée, lesdits moyens de verrouillage étant configurés de manière à ce que le verrouillage et le déverrouillage entre la PNS et le boitier puissent s'effectuer par déplacement selon l'axe longitudinal de la masselotte au moyen d'un grappin d'extraction de la PNS avec les doigts de ce grappin accrochés dans la masselotte et le reste de la PNS étant en butée longitudinale vers le bas à l'intérieur du boitier.

Selon un mode de réalisation avantageux, la tête de l'assemblage comportant en outre des trous ou une gorge adapté(e)s pour coopérer avec les doigts d'un grappin de manutention afin de réaliser la manutention de l'assemblage muni ou non de sa PNS, le grappin de manutention de l'assemblage ayant une même cinématique de fonctionnement que celle du grappin d'extraction de la PNS.

L'assemblage combustible tel que défini permet de répondre aux spécifications de liaison entre une PNS et le reste d'un assemblage combustible pour réacteur RNR-Na de quatrième génération de type ASTRID.

Pour parvenir à la définition de l'invention, les inventeurs ont fait l'analyse suivante.

Pour augmenter et atteindre une fraction surfacique de matériau neutrophage du même ordre que celle d'une PNS non démontable de type manchon comme celle de la version préliminaire illustrée aux figures 4 et 4A, il apparaît nécessaire avant tout de maximiser le diamètre externe de la PNS afin qu'il soit le plus proche possible de l'entreplat interne du boitier à section hexagonale.

Or, dans le cas d'une PNS amovible extraite par la tête d'assemblage, la réduction de diamètre interne de la tête d'assemblage, utilisée pour la préhension par le grappin de manutention, limite de fait le diamètre externe de la PNS. Cette perte de diamètre ne serait compensable que par une augmentation très significative de hauteur de la PNS.

En outre, une solution qui consisterait à fixer la PNS sur la tête d'assemblage et à développer une liaison mécanique démontable entre la tête d'assemblage et le boitier hexagonal, c'est-à-dire définir une tête d'assemblage démontable n'est pas souhaitable, essentiellement pour les deux raisons suivantes :
- tous les efforts de manutention de l'assemblage transiteraient alors par cette liaison, ce qui constituerait une prise de risque très difficilement acceptable en cas de défaillance de la liaison pendant la phase de manutention de l'assemblage combustible au-dessus du coeur, que ce soit en termes de sûreté (mise en danger de l'intégrité mécanique du coeur) comme de disponibilité (mise en place d'interventions exceptionnelles très longues);
- une telle conception permettrait difficilement de répondre à la spécification de capacité de manutention de l'assemblage avec le même grappin, qu'il soit équipé ou non de sa PNS. Il faudrait en effet, soit pouvoir monter une nouvelle tête de manutention après extraction de l'ensemble, ce qui semble a priori compliqué dans la mesure où il faudrait alors une réserve d'une pluralité de têtes à disposition lors de chaque campagne de manutention, ce qui est inenvisageable en tous cas pour un mode de stockage interne où ces opérations devraient être réalisées en ligne dans une hotte de manutention; soit disposer d'une deuxième interface de préhension dans la paroi d'assemblage en dessous de la tête d'assemblage, ce qui conduirait à une nette complexification de la fabrication de l'assemblage, voire à une incompatibilité avec certaines spécifications, comme celle de l'absence de structures acier dans la zone au-dessus des aiguilles fissiles pour favoriser l'effet plénum.

Les inventeurs sont donc parvenus à la conclusion qu'il fallait :
- définir une nouvelle interface de préhension de l'assemblage en manutention pour pouvoir développer une PNS extractible de diamètre externe proche de l'entreplat interne du boitier à section hexagonale;
- définir pour la PNS de nouveaux moyens d'accrochage et de verrouillage présentant un encombrement axial du deuxième ordre par rapport à la hauteur de matériau neutrophage nécessaire, soit un encombrement d'une dizaine de centimètres dans le cadre d'un réacteur comme ASTRID.

Les moyens de verrouillage de la PNS amovible sur la tête d'assemblage selon l'invention présentent un encombrement axial restreint. Ainsi, la réalisation de la PNS amovible n'a pas d'impact sur la hauteur de l'assemblage combustible.

De plus, par rapport au manchon de la PNS non démontable telle qu'envisagée dans la version préliminaire pour le réacteur nucléaire ASTRID, et illustrée aux figures 4 et 4A, les inventeurs ont pu diminuer le diamètre intérieur du manchon de la PNS démontable selon l'invention sans augmentation significative des pertes de charge.

Enfin, grâce à la structure de tête d'assemblage avec trous ou gorge pour sa manutention, il est possible avantageusement d'augmenter le diamètre extérieur de la PNS amovible pour se rapprocher de celui d'une PNS non démontable telle qu'illustrée en figures 4 et 4A.

Avec un faible encombrement axial des moyens de verrouillage, un diamètre intérieur de manchon ou d'enveloppe de PNS réduit et un diamètre extérieur de cette dernière important, il est possible d'augmenter le volume de matériau neutrophage au sein de la PNS amovible, par rapport à une PNS non démontable selon l'état de l'art. Les inventeurs ont montré qu'il était possible d'atteindre un volume de matériau neutrophage sensiblement équivalent à celui de la PNS non démontable telle qu'envisagée dans la version préliminaire pour le réacteur nucléaire ASTRID.

Selon une caractéristique avantageuse, la tête de PNS peut comporter une pièce formant bouchon des absorbants neutroniques de la PNS et supportant les moyens de verrouillage.

Selon un mode de réalisation avantageux, les moyens de verrouillage sont constitués par des doigts montés pivotants dans un plan vertical. Selon ce mode, chacun des doigts est de préférence monté pivotant sur un axe fixé au bouchon.

Selon une variante avantageuse, la masselotte comporte des axes fixes adaptés chacun pour coulisser à l'intérieur d'une rainure réalisée dans un doigt pivotant, un déplacement vertical en translation de la masselotte provoquant le coulissement des axes dans les rainures et par là le pivotement des doigts.

La masselotte comporte de préférence une gorge intérieure dans laquelle les doigts du grappin d'extraction de la PNS peuvent s'accrocher.

De préférence également, le boitier de l'assemblage comporte une gorge intérieure dans laquelle les doigts des moyens de verrouillage peuvent s'insérer afin de constituer une butée supérieure pour la PNS.

La PNS peut être non étanche.

Selon une variante de réalisation, la PNS comporte une ou plusieurs colonnes creuse(s) fixée(s) au bouchon et traversant la masselotte, la (les) colonne (s) étant adaptée(s) pour venir en appui contre une pièce mobile en translation du grappin d'extraction afin d'appliquer un déplacement ascendant relatif entre la masselotte et le reste de la PNS, lors du déverrouillage. Ces colonnes permettent également d'assurer la circulation du sodium à travers la PNS ainsi que la libération de l'hélium généré sous irradiation (concept de PNS non étanche).

De manière alternative, la PNS comporte une virole extérieure au bouchon, la virole étant adaptée pour venir en appui contre une pièce mobile en translation du grappin afin d'appliquer un déplacement ascendant relatif entre la masselotte et le reste de la PNS, lors du déverrouillage.

En lieu et place d'une PNS non-étanche, une PNS étanche peut être envisagée, notamment pour des réacteurs où les volumes de gaz générés sous irradiation par le matériau neutrophage seraient nuls ou faibles, ce qui serait le cas pour l'une ou l'autre des conditions suivantes:
- une absence d'utilisation de B4C fortement enrichi en bas de la PNS, typiquement en cas d'absence de spécification sur l'effet CFV,
- ou des flux neutroniques nettement plus faibles au niveau de la PNS, typiquement, en cas de présence d'une couverture axiale supérieure au-dessus du combustible fissile,
- ou l'utilisation d'un matériau autre que le B₄C et ne comportant pas de ¹⁰B, typiquement, en cas de conditions de flux nettement plus faibles au niveau de la PNS.

Selon une variante de réalisation, la PNS comporte un manchon logeant et supportant des blocs d'absorbant neutronique, et un bouchon fixé sur le dessus du manchon.

De manière alternative, la PNS comporte une enveloppe logeant des aiguilles d'absorbant neutronique, et un bouchon fixé sur le dessus de l'enveloppe et supportant ces aiguilles. En lieu et place de l'enveloppe, on pourrait envisager des grilles de maintien des aiguilles.

L'assemblage comporte de préférence une pièce fixée à l'intérieur du boitier, formant la butée axiale inférieure en bas de la PNS.

Les absorbants neutroniques embarqués dans la PNS peuvent être choisis parmi le carbure de bore (B₄C), l'hafnium (Hf), le di-borure d'hafnium (HfB₂), le di-borure de titane (TiB₂), le ferrobore (FeB), le dioxyde d'uranium (UO₂), les terres rares.

De préférence, les absorbants neutroniques producteurs d'hélium, comme B4C (carbure de bore), HfB2 (di-borure d'hafnium), TiB2 (di-borure de titane), FeB (ferrobore), sont utilisés dans une PNS non étanche.

De préférence également, les absorbants neutroniques non producteurs d'hélium, comme le dioxyde d'uranium (UO₂), l'hafnium (Hf), les terres rares, sont utilisés dans une PNS étanche.

L'invention a également pour objet un procédé de manutention d'un assemblage combustible décrit précédemment, selon lequel on utilise un grappin de manutention identique à, celui qu'on utilise pour l'extraction de la PNS.

L'invention a également pour objet un procédé de rechargement d'un assemblage combustible neuf non muni de PNS, par une PNS irradiée et extraite d'un assemblage combustible irradié décrit précédemment.

L'invention concerne encore l'utilisation d'un assemblage combustible décrit ci-dessus dans un réacteur nucléaire à neutrons rapides. Le réacteur peut être un réacteur refroidi au gaz ou au métal liquide, le métal liquide étant choisi parmi le sodium, le plomb ou le plomb-bismuth.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue externe en perspective d'un assemblage combustible selon l'état de l'art, déjà utilisé dans un réacteur nucléaire refroidi au sodium RNR-Na;
- la figure 2 est une vue en semi-coupe longitudinale de la tête d'un assemblage combustible selon l'état de l'art montrant le dispositif de protection neutronique supérieure (PNS), qui a déjà utilisé dans le réacteur nucléaire « Phénix »;
- la figure 2A est une vue en coupe transversale de la PNS de l'assemblage de la figure 2 ;
- la figure 3 est une vue en coupe longitudinale de la tête d'un assemblage combustible selon l'état de l'art montrant le dispositif de protection neutronique supérieure (PNS), qui a déjà été utilisé dans le réacteur nucléaire « Superphénix »;
- la figure 3A est une vue en semi-coupe transversale de la PNS de l'assemblage de la figure 3;
- la figure 4 est une vue en coupe longitudinale de la tête d'un assemblage combustible selon l'état de l'art montrant le dispositif de protection neutronique supérieure (PNS), qui était la version préliminaire envisagée pour le réacteur nucléaire « ASTRID»;
- la figure 4A est une vue en coupe transversale de la PNS de l'assemblage de la figure 4;
- la figure 5 est une vue en coupe longitudinale partielle d'un exemple d'assemblage combustible selon l'invention montrant le dispositif de protection neutronique supérieure (PNS), qui est destinée à être utilisée dans le réacteur nucléaire « ASTRID»;
- la figure 5A est une vue en coupe longitudinale partielle de la tête d'assemblage de la figure 5;
- la figure 5B est une vue de dessus de la tête d'assemblage de la figure 5;
- les figures 6A à 6E sont des vues en coupe longitudinale partielle illustrant différentes étapes de manutention, d'insertion et de verrouillage d'une PNS dans un exemple d'assemblage combustible selon l'invention tel que montré aux figures 5 à 5B;
- la figure 7 est une vue en coupe longitudinale au niveau de la tête d'une variante du boitier d'un assemblage combustible selon l'invention ;
- la figure 8 est une vue en coupe longitudinale partielle d'un autre exemple de tête d'assemblage combustible selon l'invention montrant le dispositif de protection neutronique supérieure (PNS), qui est destiné à être utilisée dans le réacteur nucléaire « ASTRID»;
- la figure 8A est une vue de dessus de la tête d'assemblage selon la figure 8 montrant l'agencement de la tête d'accrochage de la PNS ;
- la figure 8B est une vue en coupe transversale de la PNS selon la figure 8 montrant l'agencement des éléments absorbants de la PNS ;
- les figures 9A et 9B sont des vues en coupe longitudinale partielle illustrant deux étapes de verrouillage et de déverrouillage d'une PNS dans un autre exemple d'assemblage combustible selon l'invention tel que montré aux figures 8 à 8B.

Par souci de clarté, les mêmes références désignant les mêmes éléments d'assemblage combustible et de dispositifs de protection neutronique supérieure (PNS) selon l'art antérieur et selon l'invention sont utilisées pour toutes les figures 1 à 9B.

Dans l'ensemble de la présente demande, les termes « vertical », « inférieur », « supérieur », « bas », « haut », « dessous » et « dessus » sont à comprendre par référence par rapport à un assemblage combustible tels qu'ils est en configuration verticale dans un réacteur nucléaire.

Les figures 1 à 4A relatives à l'état de l'art ont déjà été décrites en détail en préambule et ne sont donc pas commentées ci-après.

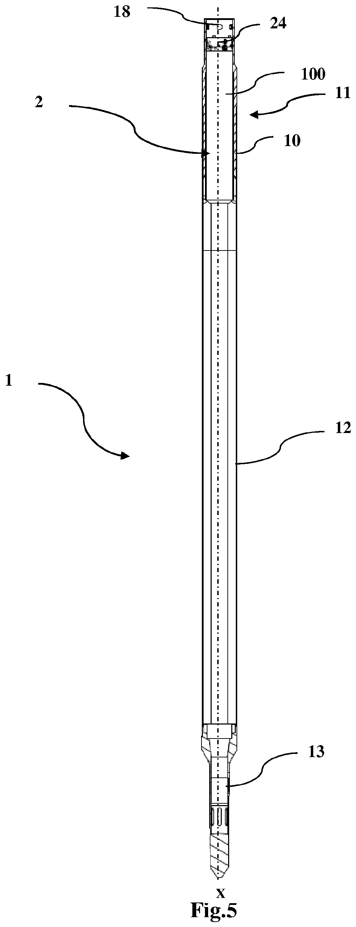

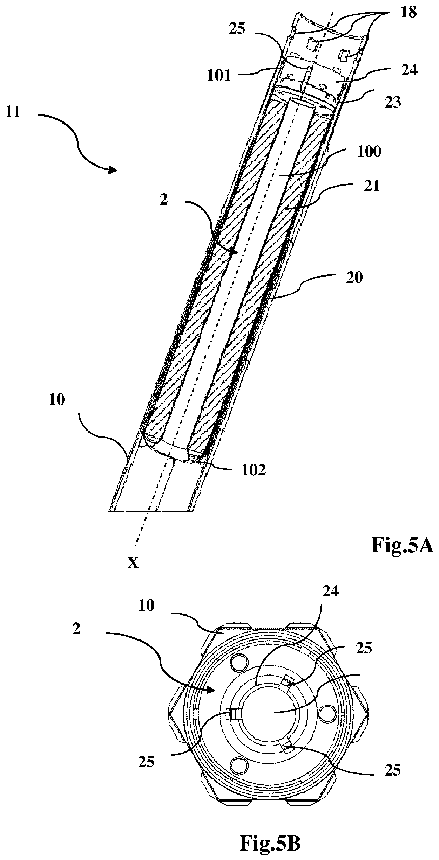

On décrit maintenant, en référence à la figure 5, un assemblage combustible 1 selon l'invention, tel qu'il est destiné à être utilisé dans un réacteur nucléaire RNR-Na de type ASTRID. Tout comme pour les assemblages combustibles selon l'état de l'art destinés à des réacteurs RNR, l'assemblage 1 selon l'invention est de forme allongée selon un axe longitudinal X et comprend un boitier 10 à section hexagonale, dont la portion supérieure 11 forme la tête de l'assemblage, et qui enveloppe un dispositif de protection neutronique 2, appelé PNS. La portion centrale 12 de l'assemblage 1 enveloppe des aiguilles de combustible non représentées.

L'assemblage 1 comprend enfin une portion inférieure 13 formant le pied de l'assemblage, dans le prolongement du boitier 10. Le pied 13 de l'assemblage présente une extrémité distale en forme de cône ou arrondie pour pouvoir être inséré à la verticale dans le sommier d'un coeur de réacteur. Le pied 13 de l'assemblage comporte également à sa périphérie des ouvertures débouchant en son sein pour la circulation du sodium à l'intérieur de l'assemblage.

La tête 11 de l'assemblage comporte en son sein un passage intérieur 100 laissé libre par la PNS 2 et qui débouche sur une ouverture centrale 110 elle-même débouchante vers l'extérieur (figures 5 et 5A). La tête 11 de l'assemblage comporte également une gorge intérieure continue 101 réalisée dans le boitier 10 et une pièce de supportage inférieure 102 fixée à l'intérieur du boitier 10.

Telle qu'illustrée aux figures 5 à 6E, la tête 11 de l'assemblage selon l'invention comporte des trous 18 répartis régulièrement angulairement et qui sont chacun adaptés pour coopérer avec un doigt d'un grappin de manutention de l'assemblage comme expliqué par la suite.

Telle qu'illustrée aux figures 5 à 6E, la PNS 2 selon l'invention comporte un manchon 20 logeant des blocs 21 de carbure de bore B₄C, en tant que matériaux neutrophages.

La PNS 2 comporte également un bouchon 23 fixé sur le dessus du manchon 20 et qui vient maintenir les blocs 21 dans ce dernier.

La PNS 2 comporte également au-dessus du bouchon 23, une masselotte 24 formant la tête de la PNS. La masselotte 24 est montée libre en translation par rapport au bouchon 23 mais uniquement sur une course donnée, des butées internes au bouchon 23 et à la masselotte 24, formées par des épaulements 231, 242, coopérant mutuellement pour les maintenir solidaires une fois la course atteinte. La masselotte 24 présente une gorge intérieure continue 240 adaptée pour coopérer avec les doigts d'un grappin d'extraction de la PNS 3 comme expliqué ci-après. La masselotte 24 intègre enfin trois axes 241 fixes.

La tête de la PNS 2 comporte également des doigts de verrouillage 25 montés pivotants autour d'un axe 230 fixe du bouchon 23 de sorte à ce que le pivotement des doigts 25 s'effectue dans des plans verticaux. Comme illustré en figure 5B, les doigts de verrouillage 25 sont au nombre de trois répartis à 120° les uns des autres. Il va de soi que le nombre de doigts 25 peut être différent, de préférence en étant régulièrement angulairement répartis à la périphérie de la couronne 24. Chacun des doigts 25 comporte une extrémité de verrouillage 250 adaptée pour coopérer avec une gorge intérieure continue 101 réalisée dans le boitier 10, et une rainure 251 évidée et de forme oblongue dans l'exemple illustré.

Selon l'invention, le montage libre en translation permet lorsqu'on rapproche la masselotte 24 vers le bouchon 23, à chaque axe fixe 241 de coulisser à l'intérieur d'une rainure 251 en provoquant un pivotement d'un doigt 25 selon un plan vertical et vers l'extérieur de la PNS 2 et ce afin de réaliser l'insertion du doigt 25 dans la gorge intérieure 101 du boitier 10, comme détaillé par la suite. La masselotte 24 reposant alors sur les doigts 25 par l'intermédiaire des axes 241 empêche leur pivotement vers l'intérieur de la PNS et produit leur verrouillage en position dans la gorge 101.

Ainsi, dans une position verrouillée de la PNS 2 dans un assemblage combustible 1, telle qu'illustrée en figure 5, 5A, 5B, 6C, 6D, 6E, 8, 8A, 8B et 9B, la PNS 2 est supportée dans sa partie inférieure, c'est-à-dire dans le bas du manchon 20, par la pièce de supportage 102 fixée à l'intérieur du boitier 10, ce qui permet d'assurer le maintien latéral de la PNS 2 ainsi que le blocage de toute translation vers le bas, et est verrouillée dans sa partie supérieure, c'est-à-dire par sa masselotte 24 par l'insertion des doigts 25 dans la gorge 101 de la tête 11 d'assemblage, ce qui permet d'assurer le blocage de toute translation vers le haut.

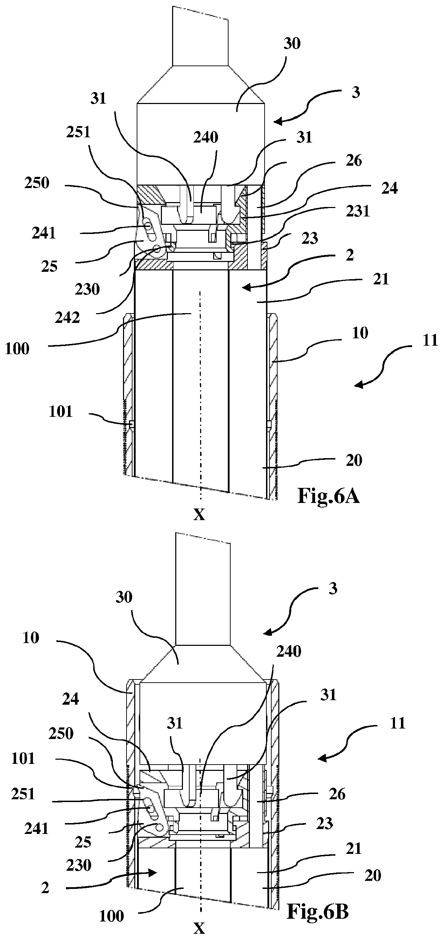

Avantageusement, une ou plusieurs colonnes creuses 26 est (sont) agencée(s) et fixée(s) sur le bouchon 23 en traversant la masselotte 24 (figures 6A à 6E). De préférence, ces colonnes 26 sont au nombre de trois réparties à 120° les unes des autres. Il va de soi que le nombre de colonnes 26 peut être différent, de préférence en étant régulièrement angulairement répartis à la périphérie du bouchon 23. Dans la position extrême d'écartement entre bouchon 23 et masselotte 24, telle qu'illustrée en figure 6A, cette (ces) colonne(s) fait (font) saillie de cette dernière.

Chacune de ces colonnes creuses 26 a les fonctions suivantes :
- elle constitue une liaison glissière entre le bouchon 23 et la masselotte 24, afin de donner un maximum de robustesse au mouvement de translation relatif entre ces deux composants;
- elle constitue un évent permettant d'assurer le remplissage du manchon 20 par le sodium et la sortie de l'hélium du manchon;
- elle permet à la tête 30 d'un grappin d'extraction 3 décrit ci-après, de forcer mécaniquement le pivotement des doigts 25 lors de l'opération de déverrouillage de la PNS.

On précise ici que dans le cadre de l'invention, on utilise l'expression « grappin d'extraction » pour désigner le grappin 3 de préhension de la PNS 2 par l'intermédiaire de la masselotte 24, parce qu'il n'est pas prévu d'assurer l'insertion de la PNS 2 dans le reste de l'assemblage en cuve de réacteur. Autrement dit, le grappin 3 n'est pas prévu pour être utilisé à des fins de cette opération d'insertion en cuve de réacteur.

Ainsi, la tête 30 du grappin 3 vient appuyer sur chaque colonne 26 afin d'appliquer un déplacement ascendant relatif entre la masselotte 24 et le reste de la PNS 2, lors d'un déverrouillage de la PNS 2 de la tête 11 d'assemblage, et donc pallie aux phénomènes de grippage mécanique susceptibles de se produire après séjour dans le sodium. Autrement dit, grâce à ces colonnes 26, on assure une sécurité de déverrouillage en cas de grippage mécanique.

L'ensemble des moyens de verrouillage/déverrouillage décrits sont conçus pour minimiser les risques de grippage mécanique. Toutes les cinématiques des différents moyens ne nécessitent aucun ajustement précis et d'importants jeux peuvent être développés entre toutes les pièces. La fonction de forçage d'un éventuel grippage par les colonnes 26 permet d'améliorer la robustesse de l'ensemble de déverrouillage, et donc garantit l'extraction en ligne de la PNS hors de son assemblage et, par-là, le taux de disponibilité du réacteur nucléaire contenant des assemblages selon l'invention.

On décrit maintenant en références aux figures 6A à 6E dans l'ordre chronologique les étapes de descente, d'insertion et de verrouillage de la PNS 2 dans l'assemblage combustible 1, ces étapes étant réalisées au moyen du grappin 3 d'extraction.

On précise, comme déjà évoqué, qu'il n'est pas prévu de réaliser l'insertion de la PNS 2 dans l'assemblage combustible 1, en cuve du réacteur ASTRID, mais lors des opérations de montage, hors cuve. On décrit néanmoins l'insertion de la PNS dans l'assemblage avec le grappin 3 d'extraction afin de décrire le fonctionnement des moyens de verrouillage/déverrouillage. En outre, cette opération d'insertion peut se produire hors cuve de réacteur, notamment en barillet de stockage externe et elle est l'inverse de l'opération d'extraction.

La préhension de la PNS 2 par le grappin d'extraction 3 est assurée au niveau de la masselotte 24 de la PNS. Le grappin 3 d'extraction comporte une tête 30 dans laquelle des doigts de préhension 31 sont montés pivotants dans un plan vertical, et la tête 30 du grappin étant montée libre en translation par rapport aux doigts 31. Les doigts 31 permettent d'assurer la préhension de la masselotte 24 en s'insérant dans sa gorge intérieure 240 et la tête 3 montée libre en translation par rapport au reste du grappin 3 permet, lorsque la PNS 2 est maintenue par les doigts 31, d'appliquer un déplacement axial relatif entre la masselotte 24 et le bouchon 23.

On réalise tout d'abord une phase d'approche et d'insertion selon laquelle le grappin 3 insère la PNS 2 dans l'assemblage 1 selon son axe longitudinal X (figure 6A) jusqu'à ce que le bas du manchon 20 vienne au contact de la pièce de supportage 102 fixée au boitier (figures 5A et 6B).

On continue à faire translater verticalement vers le bas la tête 30 libre en translation du grappin 3 ce qui applique ainsi un déplacement axial relatif de masselotte 24 par rapport au bouchon 23. Les butées, formées par les épaulements respectivement inférieur de masselotte 24 et supérieur du bouchon 23, s'éloignent alors l'un de l'autre. Par ailleurs, la translation verticale vers le bas de la masselotte 24 entraîne un pivotement des doigts 25 vers l'extérieur du fait du coulissement de chacun des axes 241 fixés sur la couronne 24 dans une rainure 251 correspondante d'un doigt 25. Les doigts 25 ayant pivotés vers l'extérieur viennent alors s'insérer dans la gorge intérieure 101 du boitier 10, ce qui empêche toute translation relative vers le haut de la PNS 2 dans l'assemblage combustible 1, et donc assure un verrouillage de la PNS 2.

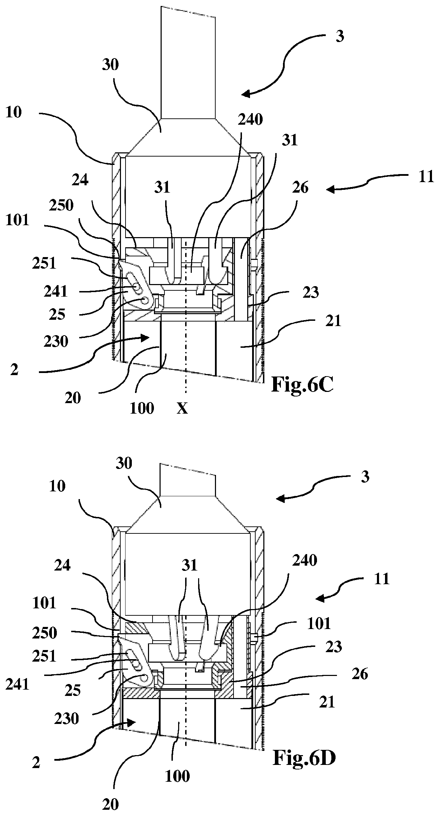

On continue la descente de la tête 30 du grappin 3 jusqu'à ce que la masselotte 24 vienne en appui contre le bouchon 23 (figure 6C).

On désactive alors la préhension par le grappin 3 en faisant pivoter les doigts 31 vers l'intérieur (figure 6D). Le grappin 3 peut alors être retiré de l'assemblage combustible 1.

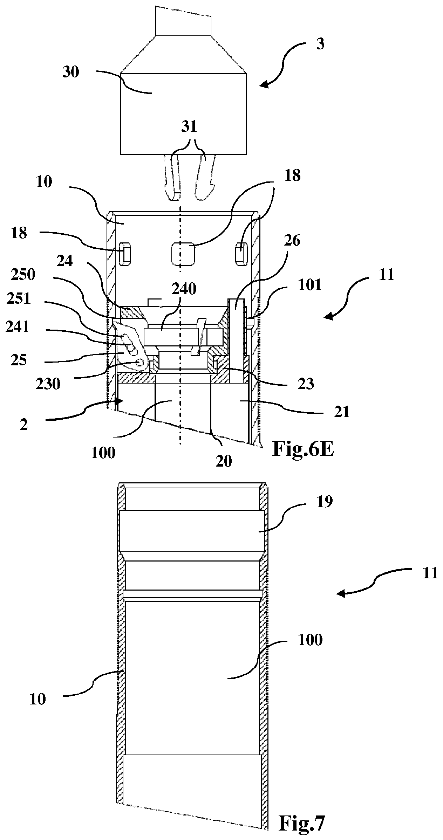

On procède enfin à la remontée du grappin 3, la PNS 2 étant insérée et verrouillée dans l'assemblage combustible 1 au moyen des doigts 25 insérés et maintenus dans la gorge 101 du boitier 10 (figure 6E). Le poids de la masselotte 24 garantit le maintien du verrouillage de la PNS 2 dans la tête 11 de l'assemblage combustible malgré la poussée hydraulique ascendante appliquée par le caloporteur en fonctionnement.

On décrit maintenant les étapes chronologiques de déverrouillage et d'extraction de la PNS 2 hors de l'assemblage combustible 1.

En position verrouillée telle qu'illustrée en figure 6E, la masselotte 24 est en appui sur le bouchon 23 et les colonnes 26 font saillie de la masselotte 24. La hauteur de saillie est prévue légèrement inférieure au déplacement axial relatif maximal entre masselotte 24 et bouchon 23.

On descend le grappin de manutention 3 jusqu'à ce que la tête 30 mobile en translation vienne en appui sur les colonnes 26.

Après préhension de la masselotte 24 par les doigts pivotants 31 du grappin 3 insérés dans la gorge 240, il est possible d'assurer une translation relative vers le haut de la masselotte 24 par rapport au bouchon 23 et donc de provoquer le pivotement des doigts de verrouillage 25 vers l'intérieur. Ce pivotement est induit par le coulissement des axes 241 dans les rainures 251.

Les doigts 25 sont alors extraits de la gorge 101 du boitier 10 et la PNS 2 est déverrouillée du reste de l'assemblage combustible 1.

Lorsque le plan transversal supérieur des colonnes 26 arrive au niveau du plan transversal supérieur de la masselotte 24, la tête 30 mobile en translation ne peut plus imposer un déplacement axial relatif entre la masselotte 24 et le bouchon 23.

Alors seule la translation vers le haut du grappin 3 permet alors de continuer l'extraction de la masselotte 24 jusqu'à ce que l'épaulement 242 réalisé en partie basse de la masselotte 24 vienne en butée contre l'épaulement 231 en partie haute du bouchon 23. La PNS 2 est alors soulevée par le grappin 3 puis extraite hors de l'assemblage combustible 1.

Un assemblage combustible 1 selon l'invention avec sa liaison de verrouillage/déverrouillage de sa PNS 2 qui vient d'être décrite permet de répondre aux spécifications fonctionnelles d'un réacteur nucléaire RNR de quatrième génération comme ASTRID.

D'autres variantes et améliorations peuvent être prévues sans pour autant sortir du cadre de l'invention.

Ainsi, on peut réaliser avantageusement une mesure du déplacement axial du grappin 3 pendant les étapes d'insertion et de verrouillage de la PNS 2 dans l'assemblage combustible 2 afin de garantir que le verrouillage visé est opérationnel.

Tel qu'illustré aux figures 5 à 6B, les différents composants de la PNS 2 et les composants de verrouillage sont conçus pour minimiser les pertes de charge dans l'écoulement du sodium. Ceci permet encore de sécuriser facilement le verrouillage, c'est-à-dire la garantie d'absence de risque d'envol de la masselotte 24 en fonctionnement du réacteur nucléaire.

Il est possible de s'affranchir d'une pièce mobile en translation pour le grappin 3 d'extraction. En effet, en l'absence de grippage, le soulèvement seul de la masselotte 24 par le grappin peut permettre de provoquer la rotation des doigts de verrouillage 25 et par là de déverrouiller la PNS 2.

En ce qui concerne la manutention proprement dite de l'assemblage combustible 1 par son boitier 10, on peut prévoir en lieu et place des trous 18 une gorge continue 19 réalisée dans la paroi intérieure du boitier 10, comme illustré en figure 7. Cette gorge continue 19 est également adaptée pour coopérer avec les doigts 31 d'un grappin de manutention ayant la même cinématique de fonctionnement que le grappin d'extraction 3.

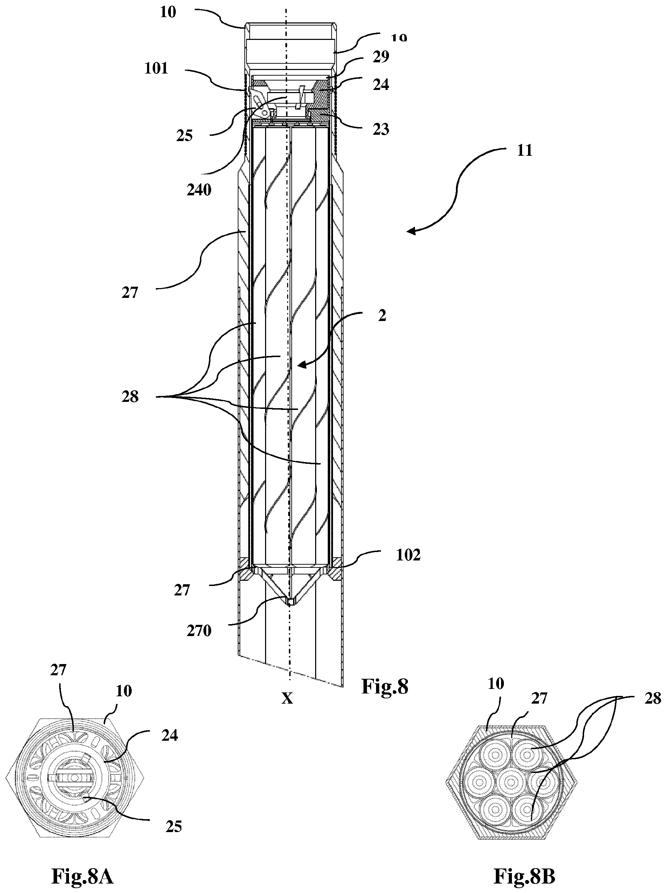

En ce qui concerne la réalisation proprement dite de la PNS 2, on peut prévoir en lieu et place d'un manchon 20 logeant les blocs 21 d'absorbants neutroniques, une enveloppe cylindrique 27 logeant une pluralité d'aiguilles d'absorbants neutroniques 28 agencées sous forme d'un faisceau, comme illustré aux figures 8 à 8B. Comme on peut mieux le voir en figure 8, l'extrémité inférieure 270 du support 27 vient également en butée contre la pièce de support 102, dans la position insérée et verrouillée de la PNS 2 dans l'assemblage combustible 1.

Dans les exemples illustrés, l'enveloppe 27 a une section transversale circulaire, mais elle pourrait avoir une section différente, par exemple une section hexagonale ou autre.

L'enveloppe 27 a une fonction de protection des aiguilles 28, notamment de l'extraction de la PNS 2 du reste de l'assemblage combustible 1. En lieu et place de l'enveloppe 27, on pourrait cependant envisager d'autres structures sans enveloppe, par exemple des grilles de maintien des aiguilles ou autres.

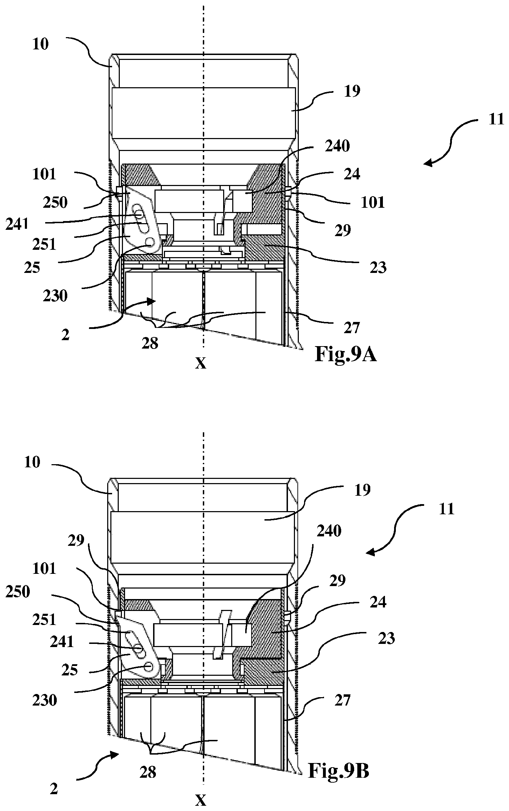

En lieu et place des colonnes 26, on peut prévoir une virole 29 solidaire du bouchon 23 et agencée à la périphérie de la masselotte 24. L'extrémité supérieure de la virole 29 est située au niveau du plan supérieur de la masselotte 24 en position déverrouillée (figure 9A) et elle fait saillie en position déverrouillée (figure 9B). L'agencement de la virole 29 d'appui à la périphérie de la masselotte 24 permet de ménager un maximum de place au centre et à la périphérie de la masselotte 24 et donc de limiter les pertes de charge en favorisant l'écoulement du sodium au travers de la couronne 24. Des ouvertures 271, avantageusement au nombre de trois réparties régulièrement espacées à 120° l'une de l'autre, sont ménagées en partie supérieure de la masselotte 24 (figure 8A). En outre, pour assurer la circulation du sodium sur les aiguilles 28, des évents non représentés sont intégrés dans la partie supérieure du bouchon 23.

En ce qui concerne les structures de maintien de faisceaux d'aiguilles, on peut envisager différentes options qui ont été développées pour les assemblages combustibles et les assemblages de maîtrise de la réactivité des RNR-Na. On peut envisager un système de rails de supportage des aiguilles, en général en partie basse pour les faisceaux d'aiguilles fissiles des assemblages combustibles, en général en partie haute pour les assemblages de maîtrise de la réactivité (faisceau suspendu). Ensuite, en fonction notamment du nombre de couronnes d'aiguilles et de leur diamètre on peut prévoir notamment :
- une enveloppe cylindrique à section circulaire associée à des fils espaceurs, comme montré en figures 8 à 9B;
- un tirant central reliant les rails de supportage à une ou plusieurs grilles d'espacement situées le long du faisceau d'aiguilles ;
- un jonc torique développé au niveau des bouchons situés à l'autre extrémité par rapport aux rails de supportage.

### Référence citée

[1]: Manuel *« Réacteurs à neutrons rapides refroidis au sodium »* - Les techniques de l'Ingénieur B 3 171

## Revendications

1. Assemblage combustible (1) pour réacteur nucléaire, notamment pour un réacteur refroidi au sodium RNR-Na, comportant un boitier (10) d'axe longitudinal (X) destiné à être inséré à la verticale dans le supportage du coeur du réacteur, le boitier comprenant une portion centrale (12) logeant des aiguilles de combustible nucléaire (14) et une portion supérieure formant la tête de l'assemblage (11) logeant un dispositif (2) de protection neutronique supérieure, PNS, comportant des absorbants neutroniques, des moyens (25) de verrouillage amovible avec le boitier (10) et une masselotte (24) formant une partie de la tête de la PNS, montée mobile en translation par rapport au reste de la PNS sur une course donnée, lesdits moyens de verrouillage (25) étant configurés de manière à ce que le verrouillage et le déverrouillage entre la PNS (2) et le boitier (10) puissent s'effectuer par déplacement selon l'axe longitudinal de la masselotte (24) au moyen d'un grappin d'extraction (3) de la PNS avec les doigts du grappin (31) accrochés dans la masselotte (24) et le reste de la PNS (2) étant en butée longitudinale vers le bas à l'intérieur du boitier (10),

2. Assemblage combustible (1) selon la revendication 1, la tête (11) de l'assemblage comportant en outre des trous (18) ou une gorge (19) adapté(e)s pour coopérer avec les doigts (31) d'un grappin de manutention afin de réaliser la manutention de l'assemblage muni ou non de sa PNS, le grappin de manutention de l'assemblage ayant une même cinématique de fonctionnement que celle du grappin d'extraction (3) de la PNS.

3. Assemblage combustible (1) selon la revendication 1 ou 2, dans lequel la tête de PNS comporte une pièce formant bouchon (23) des absorbants neutroniques de la PNS (2) et supportant les moyens de verrouillage (25).

4. Assemblage combustible (1) selon la revendication 1 ou 2, les moyens de verrouillage (25) étant constitués par des doigts (25) montés pivotants dans un plan vertical, chacun des doigts (25) étant de préférence monté pivotant sur un axe (230) fixé au bouchon (23).

5. Assemblage combustible (1) selon la revendication 4, la masselotte (24) comportant des axes fixes (241) adaptés chacun pour coulisser à l'intérieur d'une rainure (251) réalisée dans un doigt pivotant (25), un déplacement vertical en translation de la masselotte (24) provoquant le coulissement des axes (241) dans les rainures (251) et par là le pivotement des doigts (25).

6. Assemblage combustible (1) selon l'une des revendications précédentes, la masselotte (24) comportant une gorge intérieure (240) dans laquelle les doigts (31) du grappin d'extraction de la PNS (3) peuvent s'accrocher.

7. Assemblage combustible (1) selon l'une des revendications précédentes, le boitier (10) comportant une gorge intérieure (101) dans laquelle les doigts des moyens de verrouillage (25) peuvent s'insérer afin de constituer une butée supérieure pour la PNS.

8. Assemblage combustible (1) selon l'une des revendications 1 à 7, dans lequel la PNS comporte une ou plusieurs colonnes creuses (26) fixée(s) au bouchon (23) et traversant la masselotte (24), la (les) colonne (s) étant adaptée(s) pour venir en appui contre une pièce mobile (30) en translation du grappin d'extraction de la PNS (3), afin d'appliquer un déplacement ascendant relatif entre la masselotte (24) et le reste de la PNS (2) lors du déverrouillage.

9. Assemblage combustible (1) selon l'une des revendications 1 à 7, dans lequel la PNS comporte une virole (29) extérieure au bouchon (23), la virole (29) étant adaptée pour venir en appui contre une pièce mobile (30) en translation du grappin (3) afin d'appliquer un déplacement ascendant relatif entre la masselotte (24) et le reste de la PNS (2) lors du déverrouillage.

10. Assemblage combustible (1) selon l'une des revendications précédentes, la PNS (2) comportant un manchon (20) logeant et supportant des blocs (21) d'absorbant neutronique, et un bouchon (23) fixé sur le dessus du manchon (20).

11. Assemblage combustible (1) selon l'une des revendications 1 à 8, la PNS (2) comportant une enveloppe (27) logeant des aiguilles (28) d'absorbant neutronique, et un bouchon (23) fixé sur le dessus de l'enveloppe (27) et supportant les aiguilles (28).

12. Procédé de manutention d'un assemblage combustible selon l'une des revendications 1 à 11, selon lequel on utilise un grappin de manutention identique à celui (3) qu'on utilise pour l'extraction de la PNS.

13. Procédé de rechargement d'un assemblage combustible neuf (1) non muni de PNS, par une PNS irradiée et extraite d'un assemblage combustible (1) irradié selon l'une des revendications 1 à 11.

14. Utilisation d'un assemblage combustible (1) selon l'une des revendications 1 à 11, dans un réacteur nucléaire à neutrons rapides, de préférence refroidi au gaz ou au métal liquide, le métal liquide étant choisi parmi le sodium, le plomb ou le plomb-bismuth.

## Patentansprüche

1. Brennelementbündel (1) für einen Kernreaktor, insbesondere für einen natriumgekühlten SFR-Reaktor, mit einem Gehäuse (10) mit einer Längsachse (X), das dazu bestimmt ist, in der Vertikalen in die Halterung des Reaktorkerns eingeführt zu werden, wobei das Gehäuse einen die Kernbrennstäbe (14) aufnehmenden mittleren Abschnitt (12) und einen den Kopf des Bündels (11) bildenden oberen Abschnitt umfasst, in dem eine obere Neutronenabschirmungsvorrichtung PNS (2) mit Neutronenabsorbern, Mittel (25) zur lösbaren Verriegelung mit dem Gehäuse (10) und ein Körper (24) aufgenommen sind, der einen Teil des Kopfes der PNS bildet und in Bezug auf den Rest der PNS über einen bestimmten Weg translatorisch beweglich gelagert ist, wobei die Verriegelungsmittel (25) so ausgestaltet sind, dass die Verriegelung und die Entriegelung zwischen der PNS (2) und dem Gehäuse (10) durch Verlagern entlang der Längsachse des Körpers (24) mittels eines Abziehgreifers (3) der PNS erfolgt, wobei die Finger des Greifers (31) in den Körper (24) eingehakt sind und der Rest der PNS (2) im Innern des Gehäuses (10) nach unten hin im Längsanschlag ist.

2. Brennelementbündel (1) nach Anspruch 1, wobei der Kopf (11) des Bündels ferner Löcher (18) oder eine Nut (19) aufweist, die geeignet sind (ist), mit den Fingern (31) eines Handhabungsgreifers zusammenzuwirken, um die Handhabung des Bündels mit oder ohne seine PNS auszuführen, wobei der Handhabungsgreifer des Bündels dieselbe Funktionskinematik wie der Abziehgreifer (3) der PNS hat.

3. Brennelementbündel (1) nach Anspruch 1 oder 2, bei dem der Kopf der PNS ein Teil aufweist, das einen Stopfen (23) der Neutronenabsorber der PNS (2) bildet und die Verriegelungsmittel (25) trägt.

4. Brennelementbündel (1) nach Anspruch 1 oder 2, wobei die Verriegelungsmittel (25) aus Fingern (25) bestehen, die in einer vertikalen Ebene schwenkbar gelagert sind, wobei jeder der Finger (25) bevorzugt an einem am Stopfen (23) befestigten Bolzen (230) schwenkbar gelagert ist.

5. Brennelementbündel (1) nach Anspruch 4, wobei der Körper (24) feste Bolzen (241) aufweist, die jeweils geeignet sind, im Innern einer Nut (251) zu gleiten, die in einem schwenkbaren Finger (25) ausgeführt ist, wobei eine vertikale translatorische Verlagerung des Körpers (24) das Gleiten der Bolzen (241) in den Nuten (251) und dadurch das Schwenken der Finger (25) bewirkt.

6. Brennelementbündel (1) nach einem der vorhergehenden Ansprüche, wobei der Körper (24) eine innere Nut (240) aufweist, in welche sich die Finger (31) des Abziehgreifers der PNS (3) einhaken können.

7. Brennelementbündel (1) nach einem der vorhergehenden Ansprüche, wobei das Gehäuse (10) eine innere Nut (101) aufweist, in welche die Finger (25) der Verriegelungsmittel eingeführt werden können, um einen oberen Anschlag für die PNS zu bilden.

8. Brennelementbündel (1) nach einem der Ansprüche 1 bis 7, bei dem die PNS eine oder mehrere hohle Säulen (26) umfasst, die am Stopfen (23) befestigt ist (sind) und den Körper (24) durchquert (durchqueren), wobei die Säule(n) geeignet ist (sind), an einem translatorisch beweglichen Teil (30) des Abziehgreifers der PNS (3) in Anlage zu kommen, um eine relative Aufwärtsverlagerung zwischen dem Körper (24) und dem Rest der PNS (2) bei der Entriegelung anzuwenden.

9. Brennelementbündel (1) nach einem der Ansprüche 1 bis 7, bei dem die PNS einen Ring (29) außen am Stopfen (23) aufweist, wobei der Ring (29) geeignet ist, an einem translatorisch beweglichen Teil (30) des Greifers (3) in Anlage zu kommen, um eine relative Aufwärtsverlagerung zwischen dem Körper (24) und dem Rest der PNS (2) bei der Entriegelung auszuführen.

10. Brennelementbündel (1) nach einem der vorhergehenden Ansprüche, wobei die PNS (2) eine Hülse (20) aufweist, die Neutronenabsorberblöcke (21) aufnimmt und trägt, und einen Stopfen (23), der an der Oberseite der Hülse (20) befestigt ist.

11. Brennelementbündel (1) nach einem der Ansprüche 1 bis 8, wobei die PNS (2) eine Umhüllung (27) aufweist, die Neutronenabsorberstäbe (28) aufnimmt, und einen Stopfen (23), der an der Oberseite der Umhüllung (27) befestigt ist und die Stäbe (28) trägt.

12. Verfahren zur Handhabung eines Brennelementbündels nach einem der Ansprüche 1 bis 11, bei dem ein Handhabungsgreifer verwendet wird, der identisch zu dem (3) ist, der zum Abziehen der PNS verwendet wird.

13. Verfahren zum Nachfüllen eines neuen Brennelementbündels (1), das nicht mit einer PNS versehen ist, mit einer bestrahlten und aus einem abgebrannten Brennelementbündel (1) nach einem der Ansprüche 1 bis 11 entnommenen PNS.

14. Verwendung eines Brennelementbündels (1) nach einem der Ansprüche 1 bis 11 in einem Kernreaktor mit schnellen Neutronen, der bevorzugt gas- oder flüssigmetallgekühlt ist, wobei das flüssige Metall unter Natrium, Blei oder Blei-Bismut gewählt ist.

## Claims

1. A fuel assembly (1) for nuclear reactor, in particular for sodium-cooled SFR reactor, including a shroud (10) of longitudinal axis (X) intended to be inserted vertically into the diagrid of the core of the reactor, the shroud comprising a central section (12) housing nuclear fuel rods (14) and an upper section forming the head of the assembly (11) housing an upper neutron shield (UNS) device (2) including neutron absorbers, means (25) for reversibly locking with the shroud (10) and a weight (24) forming a section of the head of the UNS, said section being translationally movable with respect to the rest of the UNS over a given course, said locking means (25) being configured so that the UNS (2) and the shroud (10) can be locked and unlocked by moving the weight (24) along the longitudinal axis by means of a UNS-extracting gripper (3) with the fingers of the gripper (31) hooked into the weight (24) and the rest of the UNS (2) being in downward longitudinal abutment in the interior of the shroud (10),

2. The fuel assembly (1) as claimed in claim 1, the head (11) of the assembly furthermore including holes (18) or a groove (19) that is or are suitable for interacting with the fingers (31) of a handling gripper in order to allow the assembly to be handled whether it is or is not equipped with its UNS, the gripper for handling the assembly having the same operating movement as that of the UNS-extracting gripper (3).

3. The fuel assembly (1) as claimed in claim 1 or 2, wherein the UNS head includes a part forming a plug (23) of the neutron absorbers of the UNS (2) and supporting the locking means (25).

4. The fuel assembly (1) as claimed in claim 1 or 2, the locking means (25) consisting of fingers (25) that are mounted so as to be able to pivot in a vertical plane, each of the fingers (25) being preferably mounted so as to be able to pivot about a pivot pin (230) fastened to the plug (23).

5. The fuel assembly (1) as claimed in claim 4, the weight (24) including fixed pins (241) that are each suitable for sliding in the interior of a slot (251) in a pivoting finger (25), a vertical translational movement of the weight (24) causing the pins (241) to slide in the slots (251) and thus the fingers (25) to pivot.

6. The fuel assembly (1) as claimed in one of the preceding claims, the weight (24) including an interior groove (240) into which the fingers (31) of the UNS-extracting gripper (3) may be hooked.

7. The fuel assembly (1) as claimed in one of the preceding claims, the shroud (10) including an interior groove (101) into which the fingers of the locking means (25) may insert to form an upper stop for the UNS.

8. The fuel assembly (1) as claimed in one of claims 1 to 7, wherein the UNS includes one or more hollow columns (26) that is or are fastened to the plug (23) and that pass through the weight (24), the one or more columns being suitable for being brought to bear against a translationally movable part (30) of the UNS-extracting gripper (3), in order to create an ascendant relative movement between the weight (24) and the rest of the UNS (2) during the unlocking operation.

9. The fuel assembly (1) as claimed in one of claims 1 to 7, wherein the UNS includes a ferrule (29) that is exterior to the plug (23), the ferrule (29) being suitable for being brought to bear against a translationally movable part (30) of the gripper (3) in order to create an ascendant relative movement between the weight (24) and the rest of the UNS (2) during the unlocking operation.

10. The fuel assembly (1) as claimed in one of the preceding claims, the UNS (2) including a sleeve (20) housing and supporting blocks (21) of neutron absorber, and a plug (23) fastened to the top of the sleeve (20).

11. The fuel assembly (1) as claimed in one of claims 1 to 8, the UNS (2) including a wrapper (27) housing rods (28) of neutron absorber, and a plug (23) fastened to the top of the wrapper (27) and supporting the rods (28).

12. A method for handling a fuel assembly as claimed in one of claims 1 to 11, wherein a handling gripper that is of the same type as, and preferably identical to, that (3) used for the extraction of the UNS is used.

13. A method for equipping a new fuel assembly (1) not equipped with a UNS, with an irradiated UNS extracted from an irradiated fuel assembly (1) as claimed in one of claims 1 to 11.

14. The use of a fuel assembly (1) as claimed in one of claims 1 to 11, in a fast neutron nuclear reactor, preferably being liquid-metal or gas-cooled, the liquid metal being chosen from sodium, lead or lead-bismuth.
